# EUROPÄISCHE PATENTANMELDUNG

(11) **EP 4 821 628 A1**
(43) Veröffentlichungstag der Anmeldung: **14.10.2026**
(21) Anmeldenummer: 25170059.7
(22) Anmeldetag: 11.04.2025
(51) Int. Cl.: B23K 11/00, B23K 11/11, B23K 11/31, B23K 11/36, B21F 27/10, B23K 101/32

(54) **BAUGRUPPE FÜR EINE GITTER-SCHWEISSMASCHINE ZUM STIRNSEITIGEN VERSCHWEISSEN EINES ÄUSSEREN LÄNGSDRAHTS MIT QUERDRÄHTEN**

(71) Anmelder: Schlatter Industries AG, 8952 Schlieren (CH)
(72) Erfinder: Siegrist, Roger, 5524 Niederwil (CH)
(74) Vertreter: Keller Schneider Patent- und Markenanwälte AG

(57) **Zusammenfassung**

Eine Baugruppe (1) für eine Gitter-Schweissmaschine zum stirnseitigen Verschweissen eines äusseren Längsdrahts mit Querdrähten umfasst eine erste Schweisselektrode (21) mit einer ersten Kontaktfläche zum Kontaktieren des äusseren Längsdrahts und eine zweite Schweisselektrode (11) mit einer zweiten Kontaktfläche zum Kontaktieren eines der Querdrähte. Dabei ist die erste Schweisselektrode (21) in einer ersten Richtung zustellbar und die zweite Schweisselektrode (11) ist in einer zweiten Richtung zustellbar, wobei die zweite Richtung eine Komponente senkrecht zur ersten Richtung aufweist. Die zweite Schweisselektrode (11) ist derart gelagert, dass die zweite Kontaktfläche um eine Schwenkachse (15) beweglich ist, wobei die Schwenkachse (15) senkrecht zur ersten und zur zweiten Richtung steht. In einem Verfahren zur Herstellung eines Drahtgitters wird entsprechend ein äusserer Längsdraht stirnseitig mit Querdrähten verschweisst. Dazu wird einer der Querdrähte auf mehreren inneren Längsdrähten positioniert, ein äusserer freier Abschnitt des Querdrahts wird in eine erste Richtung senkrecht zu einer Hauptrichtung der Längsdrähte und zu einer Hauptrichtung des Querdrahts deformiert und der äussere Längsdraht wird in einer Schweissposition am freien Ende des deformierten Querdrahts positioniert. Anschliessend erfolgt das gleichzeitige Verschweissen das äusseren Längsdrahts und der inneren Längsdrähte mit dem Querdraht. Schliesslich kann der Querdraht entlastet werden.

## Beschreibung

### Technisches Gebiet

Die Erfindung betrifft eine Baugruppe für eine Gitter-Schweissmaschine zum stirnseitigen Verschweissen eines äusseren Längsdrahts mit Querdrähten. Sie betrifft weiter eine Gitter-Schweissmaschine mit mindestens einer solchen Baugruppe und ein Verfahren zur Herstellung eines Drahtgitters, wobei ein äusserer Längsdraht stirnseitig an Querdrähte verschweisst wird.

### Stand der Technik

Gitter-Schweissmaschinen dienen zum Verschweissen von Metalldrähten zu Gittern, wobei in der Regel Querdrähte sukzessive auf eine Gruppe von parallel angeordneten Längsdrähten aufgeschweisst werden. Das Schweissen erfolgt typischerweise mittels elektrischem Widerstandsschweissen. Die resultierenden Gitter werden in verschiedenartigen Anwendungen eingesetzt, so z. B. als Armierungsgitter, Gitterkanäle (z. B. für die Kabelführung), Gitterbehälter (z. B. für Paletten oder Einkaufswagen) uvm.

Typischerweise werden in einem Hauptteil des Gitters die Querdrähte einseitig oder beidseitig auf die parallelen Längsdrähte geschweisst. In gewissen Anwendungen ist es gewünscht, in den Randbereichen stirnseitig auf die Querdrähte einen weiteren, äusseren Längsdraht (sog. T-Draht) aufzuschweissen. Gitter mit einem solchen seitlichen Abschluss werden z. B. für Gitterkanäle zur Kabelführung genutzt, um zu vermeiden, dass sich Kabel in den äusseren Zwischenräumen zwischen den Querdrähten verhaken oder durch scharfe Kanten im Gitter-Randbereich beschädigt werden.

Herkömmlich wird dazu eine zweite Schweissstation genutzt, d. h. das Aufschweissen der äusseren Längsdrähte erfolgt in einer separaten Schweissebene. Die US 3,536,887 (Lichtgitter GmbH) beschreibt z. B. eine Vorrichtung zum Anschweissen von randseitigen Drähten an ein Drahtgitter, bei der das Verschweissen dieser Drähte erst nach der Herstellung des Hauptteils des Gitters erfolgt, mit einem Schweisskopf, der schräg auf die jeweilige Schweissstelle gerichtet ist. Es sind weitere Lösungen bekannt, bei denen die weitere Schweisseinrichtung stromabwärts der Haupt-Schweissebene angeordnet ist.

Dies führt zu einem erhöhten Bauteilaufwand und gegebenenfalls zu einem höheren Platzbedarf für die Gitterschweissmaschine und einem geringeren Durchsatz.

### Darstellung der Erfindung

Aufgabe der Erfindung ist es, eine dem eingangs genannten technischen Gebiet zugehörende Baugruppe zu schaffen, welche eine effiziente Herstellung von Drahtgittern mit äusseren Längsdrähten (T-Drähten) in einer Gitter-Schweissmaschine ermöglicht.

Die Lösung der Aufgabe ist durch die Merkmale des Anspruchs 1 definiert. Gemäss der Erfindung umfasst die Baugruppe
a) eine erste Schweisselektrode mit einer ersten Kontaktfläche zum Kontaktieren des äusseren Längsdrahts;
b) eine zweite Schweisselektrode mit einer zweiten Kontaktfläche zum Kontaktieren eines der Querdrähte;
wobei
c) die erste Schweisselektrode in einer ersten Richtung zustellbar ist;
d) die zweite Schweisselektrode in einer zweiten Richtung zustellbar ist, wobei die zweite Richtung eine Komponente senkrecht zur ersten Richtung aufweist ; und
e) die zweite Schweisselektrode derart gelagert ist, dass die zweite Kontaktfläche um eine Schwenkachse beweglich ist, wobei die Schwenkachse senkrecht zur ersten und zur zweiten Richtung steht.

Die zweite Richtung verläuft insbesondere im Wesentlichen senkrecht zur ersten Richtung, es sind aber auch Ausführungsformen möglich, bei der die erste und die zweite Richtung schräg zueinander stehen. Die erste Schweisselektrode und/oder die zweite Schweisselektrode können auch entlang einer gebogenen Bahn zugestellt werden, wobei die Bahn der zweiten Schweisselektrode eine Komponente senkrecht zur Bahn der ersten Schweisselektrode aufweist.

Die Schwenkachse für die zweite Schweisselektrode kann als physische Schwenkachse realisiert sein oder der entsprechende Freiheitsgrad ergibt sich als Kombination von mehreren linearen und/oder Rotationsbewegungen. In einer bevorzugten Ausführungsform ist die Schwenkachse durch eine bogenförmige Führung für die zweite Schweisselektrode realisiert, die insbesondere derart angeordnet ist, dass sich eine geometrische Schwenkachse im Wesentlichen auf der Ebene der Kontaktfläche der zweiten Schweisselektrode ergibt. Nebst der Möglichkeit des Verschwenkens um eine (geometrische) Schwenkachse kann die Kontaktfläche der Elektrode weitere Freiheitsgrade aufweisen, die z. B. ein Verschwenken um eine weitere Achse oder eine lineare Bewegung senkrecht zu einer Zustellbewegung der Schweisselektrode ermöglichen.

Zur Durchführung des erfindungsgemässen Verfahrens (siehe unten) reicht es in der Regel aus, wenn ein Schwenkwinkel von maximal ±10°, insbesondere von maximal ±5°, um eine Mittellage ermöglicht ist.

Insbesondere mit einer Gitter-Schweissmaschine mit einer derartigen erfindungsgemässen Baugruppe lässt sich ein erfindungsgemässes Verfahren zur Herstellung eines Drahtgitters durchführen. Dabei werden zum stirnseitigen Verschweissen eines äusseren Längsdrahts mit Querdrähten folgende Schritte ausgeführt:
a) Positionieren eines der Querdrähte auf mehreren inneren Längsdrähten;
b) Deformieren eines äusseren freien Abschnitts des Querdrahts in eine erste Richtung senkrecht zu einer Hauptrichtung der Längsdrähte und zu einer Hauptrichtung des Querdrahts;
c) Positionieren des äusseren Längsdrahts in einer Schweissposition am freien Ende des deformierten Querdrahts;
d) Verschweissen das äusseren Längsdrahts und der inneren Längsdrähte mit dem Querdraht; und
e) Entlasten des Querdrahts.

Die Deformation des Querdrahts erfolgt insbesondere senkrecht zur (zukünftigen) Gitterebene bzw. aus dieser Ebene hinaus. Die Schritte a)-e) müssen nicht zwingend in der aufgeführten Reihenfolge ausgeführt werden, namentlich kann der Schritt b) nach dem Schritt c) ausgeführt werden. Die Deformation erfolgt in einer Weise, dass der Querdraht innerhalb seiner Elastizitätsgrenzen bleibt. Das Entlasten des Querdrahts führt dann insbesondere zu einem Rückfedern, so dass sich letztlich ein ebenes Gitter ergibt.

Das Verschwenken der zweiten Schweisselektrode ermöglicht eine zuverlässige und gleichbleibende Kontaktierung des Querdrahts mit der Kontaktfläche der Schweisselektrode, unabhängig vom jeweiligen Deformationszustand des Querdrahts.

Die erfindungsgemässe Baugruppe und das erfindungsgemässe Verfahren ermöglichen eine schnelle und zuverlässige Fertigung von Drahtgittern mit äusseren Längsdrähten (T-Drähten), wobei das Verschweissen der T-Drähte in derselben Ebene wie das Verschweissen der inneren Längsdrähte erfolgen kann. Dies reduziert den Bauteilaufwand und gegebenenfalls die axiale Länge der Schweissstation.

Bevorzugt erfolgt das Verschweissen der T-Drähte gleichzeitig mit demjenigen der inneren Längsdrähte. Dies ermöglicht einen höheren Durchsatz.

Obwohl das Verschweissen des T-Drahts bzw. der T-Drähte bevorzugt gleichzeitig und in derselben Vertikalebene erfolgt wie das Verschweissen der inneren Längsdrähte, sind auch Ausführungsformen möglich, bei denen die Baugruppe stromauf- oder -abwärts der Schweissposition für die inneren Längsdrähte angeordnet ist.

Mit Vorteil beträgt ein Verhältnis zwischen einem Deformationsweg des äusseren freien Abschnitts des Querdrahts am freien Ende des Querdrahts zu einer Eindringtiefe des Querdrahts in die inneren Längsdrähte 0.25-1, insbesondere 0.4-0.75. Dies stellt sicher, dass mit minimaler Deformation ein flaches Gitter erhalten werden kann. Bei der initialen Deformation, vor dem Schweissvorgang wird die Eindringtiefe teilweise, insbesondere ca. zur Hälfte, vorkompensiert. Während des Schweissvorgangs ergibt sich dann eine Deformation in umgekehrter Richtung, um den restlichen Teil, insbesondere die zweite Hälfte, der Eindringtiefe zu kompensieren.

Grundsätzlich sind auch stärkere oder schwächere Deformationen möglich, wobei jeweils darauf zu achten ist, dass die Elastizitätsgrenze des Querdrahts nicht überschritten wird. Falls dieses Kriterium eingehalten werden kann, ist auch ein Verfahren möglich, bei dem keine Deformation in umgekehrter Richtung notwendig ist.

Bevorzugt erfolgt das Deformieren des äusseren freien Abschnitts mithilfe einer beweglichen Schweisselektrode. Durch die Verwendung der zweiten Schweisselektrode als Druckelement verringert sich der Bauteilaufwand und der Verfahrensablauf wird vereinfacht.

Bevorzugt weist die Baugruppe ein Anschlagelement auf, das in der zweiten Richtung gegenüber der zweiten Schweisselektrode angeordnet ist. Der Querdraht kann so deformiert werden, indem er von der zweiten Schweisselektrode gegen das Anschlagelement gedrückt wird. Gleichzeitig wird ein innerer Abschnitt des Querdrahts bevorzugt zwischen den Schweisselektroden der weiteren Elektrodenpaare in einer definierten Position gehalten.

Das zweite Anschlagelement ist insbesondere unbeweglich an der Baugruppe bzw. einem Maschinengestell der Schweissmaschine angeordnet. Seine dem Querdraht zugewandte Kontaktfläche kann geneigt sein, so dass sie der Geometrie des deformierten Querdrahts entspricht und den Deformationsvorgang definiert.

Durch Positionieren des Anschlagelements kann der Deformationsweg eingestellt werden. Dieser wird in der Regel anhand der obigen Überlegungen in Abhängigkeit der Eindringtiefe eingestellt. Die Eindringtiefe hängt von der Geometrie der Längs- und Querdrähte sowie Verfahrensparametern ab, ist aber im Rahmen eines Gitterschweissverfahrens jeweils bekannt bzw. vorgegeben.

Bevorzugt wird im Rahmen des erfindungsgemässen Verfahrens eine Kontaktfläche der beweglichen Schweisselektrode während des Schritts b) und/oder des Schritts d) verschwenkt, um eine Auflagefläche zwischen Schweisselektrode und Querdraht konstant zu halten.

Bevorzugt umfasst die zweite Schweisselektrode ein Federelement, um die zweite Kontaktfläche bei fehlender Gegenkraft in eine Grundstellung zu bewegen, wobei in der Grundstellung die zweite Kontaktfläche insbesondere parallel zur ersten Richtung und zur Schwenkachse verläuft. Das Federelement stellt sicher, dass die Kontaktfläche der zweiten Schweisselektrode beim Kontaktieren des Querdrahts eine definierte, zum Querdraht parallele Position (Grundstellung) aufweist. Aufgrund der Wechselwirkung zwischen der Kontaktfläche und des Querdrahts wird dann das Federelement deformiert, so dass die zweite Schweisselektrode die erwähnte Schwenkbewegung durchführen kann, in einer Weise, dass die Kontaktfläche stets gleichmässig auf dem Querdraht aufliegt.

Das Federelement ist insbesondere als Federblech ausgebildet. Dieses kann mit beiden Seiten eines Schwenkmechanismus verbunden sein. Es ist insbesondere bandartig ausgebildet, verläuft in einer Ebene senkrecht zur Schwenkachse und weist eine C-Form auf. Es können auch zwei oder mehr solche Federelemente parallel angeordnet sein.

Die benötigte Federkraft ist in der Regel gering, insbesondere dann, wenn die Kontaktfläche der zweiten Schweisselektrode schon aufgrund der Gravitationsbeschleunigung ohne externe Kräfte ihre Grundstellung einnimmt. In gewissen Fällen kann dies sogar genügen, so dass auf das Federelement verzichtet werden kann.

Statt der zweiten Schweisselektrode kann im Rahmen des erfindungsgemässen Verfahrens ein separates Druckelement eingesetzt werden.

Bevorzugt umfasst die Baugruppe ein Positionierelement, das parallel zur ersten Richtung beweglich ist, um einen der Querdrähte stirnseitig in eine vorgegebene Querstellung zu bewegen, wobei eine dritte Kontaktfläche des Positionierelements der ersten Kontaktfläche der ersten Schweisselektrode benachbart angeordnet ist. Dies bedeutet, dass die dritte Kontaktfläche und die erste Kontaktfläche im Wesentlichen parallel sind bzw. auf dieselbe Ebene wirken. Die dritte Kontaktfläche ist bei geöffneter zweiter Schweisselektrode insbesondere einem Zwischenraum zwischen der zweiten Kontaktfläche und dem Anschlagelement zugewandt.

Das Positionierelement ermöglicht eine genaue Positionierung des zu verschweissenden Querdrahts in Bezug auf den äusseren Längsdraht bzw. die äusseren Längsdrähte. Insbesondere befinden sich die zweite Schweisselektrode und das Positionierelement oberhalb der Gitterebene.

Insbesondere ist beidseitig je ein Positionierelement vorhanden, so dass die Positionierelemente gleichzeitig mit beiden Stirnseiten eines Querdrahts zusammenwirken und diesen in seine Sollposition bewegen können.

Eine Gitter-Schweissmaschine umfasst bevorzugt mindestens eine erfindungsgemässe Baugruppe und mindestens ein weiteres Elektrodenpaar zum Anschweissen des Querdrahts an mindestens einen weiteren Längsdraht entlang einer Längsausdehnung des Querdrahts. Dabei sind die erste Schweisselektrode, die zweite Schweisselektrode und das mindestens eine weitere Elektrodenpaar in einer gemeinsamen Querebene angeordnet. Dies ermöglicht das gleichzeitige Verschweissen von inneren und äusseren Längsdrähten.

Bevorzugte Ausführungsformen der Gitter-Schweissmaschine umfassen mindestens eine weitere Schweisselektrode, die der zweiten Schweisselektrode in der zweiten Richtung gegenüberliegend angeordnet ist, wobei die weitere Schweisselektrode und die erste Schweisselektrode parallel miteinander verschaltet sind. So lassen sich der äussere Längsdraht (T-Draht) und der äusserste der inneren Längsdrähte gleichzeitig verschweissen, wobei die zweite Schweisselektrode eine erste Polarität und die erste und die dritte Schweisselektrode eine zweite Polarität aufweisen. Die zweite Schweisselektrode ist insbesondere derart ausgebildet und positioniert, dass sie den Bereich des Querdrahts von dessen freien, mit dem T-Draht zu verschweissenden, Ende bis zum äussersten der inneren Längsdrähte weitgehend abdeckt.

In einer Variante sind die erste und dritte Schweisselektrode separaten Schweissstromkreisen zugeordnet. Dies schafft zusätzliche Freiheitsgrade für die Versorgung mit Schweissstrom.

Eine erfindungsgemässe Gitter-Schweissmaschine umfasst insbesondere folgendes:
a) eine erste erfindungsgemässe Baugruppe;
b) eine erste weitere Schweisselektrode, angeordnet innen angrenzend an die erste Baugruppe;
c) eine zweite erfindungsgemässe Baugruppe;
d) eine zweite weitere Schweisselektrode, angeordnet innen angrenzend an die zweite Baugruppe; und
e) mindestens ein weiteres Elektrodenpaar, angeordnet zwischen der ersten weiteren Schweisselektrode und der zweiten weiteren Schweisselektrode.

«Innen» bezeichnet hier eine Richtung auf das Zentrum des Gitters, in Querrichtung, zu. Mit einer solchen Schweissmaschine lassen sich Gitter herstellen, bei denen ein Querdraht beidseitig mit stirnseitigen äusseren Längsdrähten (T-Drähten) sowie mehreren dazwischenliegenden inneren Längsdrähten verschweisst werden kann.

Bevorzugt sind die Längsdrähte derart zuführbar, dass die erste Baugruppe und die erste weitere Schweisselektrode einen ersten äusseren Längsdraht und einen ersten weiteren Längsdraht mit dem Querdraht verschweissen, dass die zweite Baugruppe und die zweite weitere Schweisselektrode einen zweiten äusseren Längsdraht und einen zweiten weiteren Längsdraht mit dem Querdraht verschweissen, und dass das mindestens eine weitere Elektrodenpaar mindestens einen dritten und einen vierten weiteren Längsdraht mit dem Querdraht verschweisst, wobei die erste Baugruppe mit der ersten Schweisselektrode, die zweite Baugruppe mit der zweiten Schweisselektrode und das mindestens eine weitere Elektrodenpaar über denselben Schweissstromkreis mit Schweissstrom versorgt werden. Weil stets zwei Längsdrähte (ein äusserer und ein innerer Längsdraht oder zwei innere Längsdrähte) mit entsprechenden Elektrodenpaaren verschweisst werden, können - zumindest bei gleichem oder ähnlichem Querschnitt der inneren und äusseren Längsdrähte - alle Schweissungen inklusive diejenigen der äusseren Längsdrähte aus derselben Schweissstromquelle, mit der gleichen Schweissspannung, versorgt werden. Dies verringert den Bauteilaufwand.

Es sind andere Konfigurationen möglich, bei denen zwei oder mehr separate Schweissstromkreise mit unterschiedlichen Schweissspannungen eingesetzt werden, z. B. dann wenn in einzelnen Schweissgruppen unterschiedliche Anzahlen von Längsdrähten und/oder Längsdrähte mit unterschiedlichen Querschnitten mit dem Querdraht verschweisst werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Seitenansicht einer Ausführungsform einer erfindungsgemässen Baugruppe für eine Gitter-Schweissmaschine zum stirnseitigen Verschweissen eines äusseren Längsdrahts mit Querdrähten;
- Fig. 2A: eine Schrägansicht des unteren Abschnitts einer Schweisselektrodeneinheit der erfindungsgemässen Baugruppe, mit schwenkbarer Elektrode;
- Fig. 2B: eine Schrägansicht eines Federelements der Schweisselektrodeneinheit;
- Fig. 3: eine schematische Querschnittsansicht durch ein Ausführungsbeispiel einer erfindungsgemässen Gitter-Schweissmaschine mit zwei erfindungsgemässen Baugruppen; und
- Fig. 4A-I: schematische Querschnittsansichten zur Illustration des Verschweissens eines Querdrahts mit mehreren Längsdrähten, einschliesslich zweier seitlicher T-Drähte.

Grundsätzlich sind in den Figuren gleiche Teile mit gleichen Bezugszeichen versehen.

### Wege zur Ausführung der Erfindung

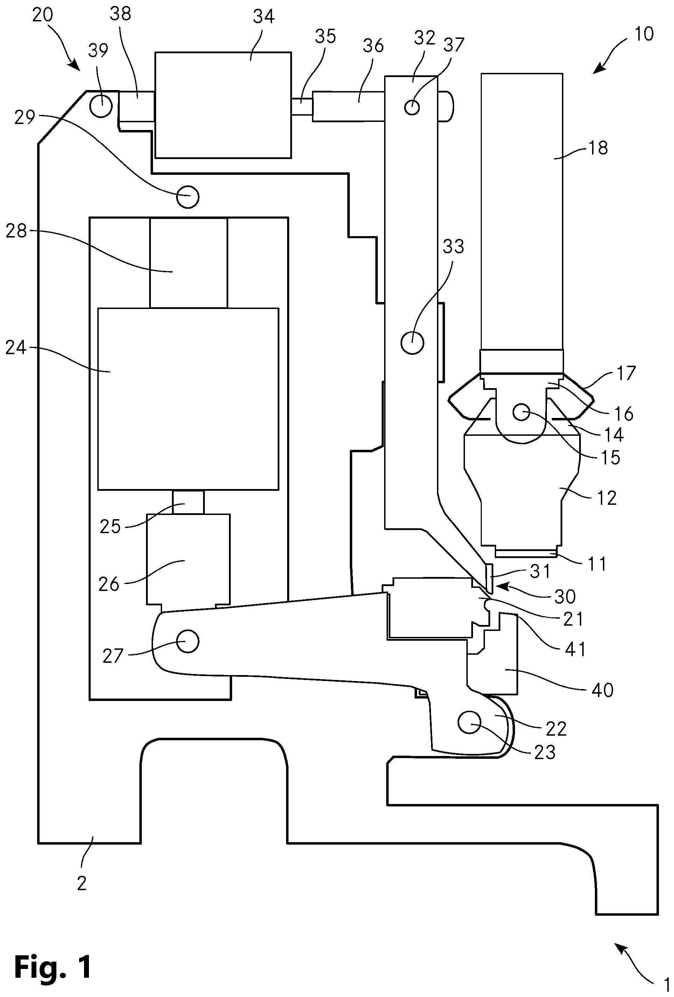

Die Figur 1 ist eine schematische Seitenansicht einer Ausführungsform einer erfindungsgemässen Baugruppe für eine Gitter-Schweissmaschine zum stirnseitigen Verschweissen eines äusseren Längsdrahts mit Querdrähten. Zur Verbesserung der Übersichtlichkeit sind gewisse Elemente, insbesondere Elemente zur Stromführung wie Strombänder, weggelassen. Diese sind in an sich bekannter Weise an der Baugruppe angeordnet.

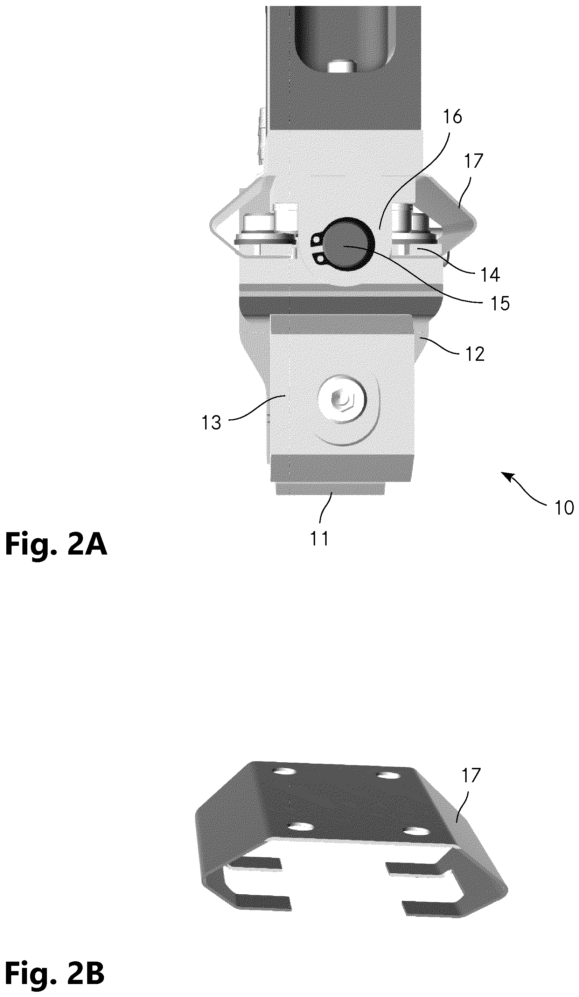

Die Baugruppe 1 umfasst einen Rahmen 2, an dem eine Grundeinheit 20 angeordnet ist. Sie umfasst weiter eine Schweisselektrodeneinheit 10. Diese ist auch in den Figuren 2A, 2B dargestellt, die eine Schrägansicht des unteren Abschnitts der Schweisselektrodeneinheit 10 sowie eine Schrägansicht eines Federelements der Schweisselektrodeneinheit 10 zeigen. Die Schweisselektrodeneinheit 10 ist in an sich bekannter Weise an einer Schweisspresse gelagert und somit relativ zum Rahmen 2 mit der Grundeinheit 20 in vertikaler Richtung beweglich.

Die Schweisselektrodeneinheit 10 weist an ihrer unteren Stirnseite eine Schweisselektrode 11 auf, die in einem Elektrodenhalter 12 gehalten ist. Die Befestigung erfolgt mit Hilfe einer Klemmbride 13. Der Elektrodenhalter weist an seinem oberen Ende ein Gelenk-Unterteil 14 auf. Dieses ist über eine (hier senkrecht zur Zeichenebene verlaufende) Schwenkachse 15 gelenkig an einem Gelenk-Oberteil 16 gelagert. Ein Federelement 17 führt das Gelenk-Unterteil 14 beim Fehlen äusserer Kräfte in eine Grundstellung zurück, in der eine stirnseitige Kontaktfläche der Schweisselektrode 11 horizontal orientiert ist. Das Federelement 17 ist C-förmig, wobei der mittlere Schenkel horizontal am Gelenk-Oberteil befestigt ist und die beiden unteren Schenkel über je zwei Laschen am Gelenk-Unterteil 14. Das Gelenk-Oberteil 16 ist an einem Adapter 18 zur Anbringung an der Schweisspresse (nicht dargestellt) angeordnet.

An der Grundeinheit 20 ist eine weitere Schweisselektrode 21 beweglich gelagert. Dazu ist sie auf einem Schwenkhebel 22 befestigt, der über eine (wiederum senkrecht zur Zeichenebene verlaufende) Schwenkachse 23 am Rahmen 2 gelagert ist. Der Schwenkhebel 22 ist im Wesentlichen L-förmig, wobei im kurzen, vertikal verlaufenden Schenkel das Lager für die Schwenkachse 23 ausgebildet ist, während der längere, ausgehend von der Aufnahme für die Schweisselektrode 21 nach hinten horizontal verlaufende Schenkel im Bereich seines hinteren Endes ein Lager für eine Gelenkachse 27 aufweist. Über diese ist der Schwenkhebel 22 an einem Gabelkopf 26 schwenkbar gelagert. Der Gabelkopf 26 ist am freien Ende einer Kolbenstange 25 eines doppeltwirkenden Pneumatikzylinders 24 angeordnet, der als Kurzhubzylinder ausgebildet ist. Der Pneumatikzylinder 24 ist an seinem oberen Ende an einem Schwenkflansch 28 befestigt, der über eine Gelenkachse 29 am Rahmen 2 gelagert ist. Durch Betätigen des Pneumatikzylinders 24 lässt sich somit der Schwenkhebel und damit die Schweisselektrode 21 um die Schwenkachse 23 verschwenken. Es ergibt sich eine Zustellbewegung der Schweisselektrode 21 im Wesentlichen in horizontaler Richtung, wobei die Kontaktfläche der Schweisselektrode 21 im Wesentlichen in einer vertikalen Ebene verläuft. Sie weist eine Einbuchtung auf, die der Geometrie eines zu verschweissenden äusseren Längsdrahts (T-Drahts) angepasst ist.

An der Grundeinheit 20 ist zudem ein Pusher 30 beweglich gelagert. Der Pusher 30 weist an seinem freien Ende eine Druckplatte 31 auf. Diese ist im Wesentlichen parallel zur Kontaktfläche der weiteren Schweisselektrode 21 angeordnet. Die Druckplatte ist am Ende eines schräg nach unten verlaufenden Schenkels eines weiteren Schwenkhebels 32 befestigt. Der Schwenkhebel 32 ist um eine Schwenkachse 33 am Rahmen 2 gelagert. Diese befindet sich ungefähr in der Mitte eines geraden Hauptabschnitts des Schwenkhebels 32. Am oberen Ende dieses Hauptabschnitts ist ein Lager für eine Gelenkachse 37 angeordnet. Über diese ist der Schwenkhebel 32 an einem Gelenkkopf 36 schwenkbar gelagert. Der Gelenkkopf 36 wiederum ist am freien Ende einer Kolbenstange 35 eines weiteren Pneumatikzylinders 34 angeordnet. Auch hier handelt es sich um einen doppeltwirkenden Kurzhubzylinder. Dieser ist über einen Schwenkflansch 38 und eine Gelenkachse 39 wiederum schwenkbar am Rahmen 2 gelagert.

Weiter ist an der Grundeinheit 20 ein Anschlagelement 40 angeordnet. Dieses weist eine Anschlagfläche 41 auf, die sich im Wesentlichen horizontal angrenzend an die weitere Schweisselektrode 21 erstreckt.

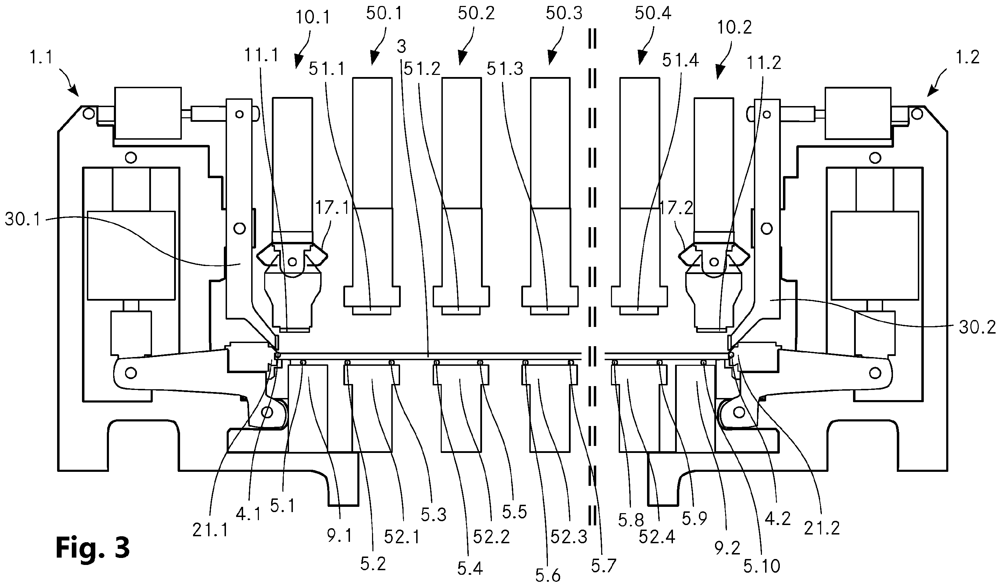

Die Figur 3 ist eine schematische Querschnittsansicht durch ein Ausführungsbeispiel einer erfindungsgemässen Gitter-Schweissmaschine mit zwei erfindungsgemässen Baugruppen. Dargestellt in der Figur ist die vertikale Ebene, in der der Schweissvorgang zwischen einem Querdraht und mehreren Längsdrähten stattfindet. Gezeigt sind die zwei Baugruppen 1.1, 1.2 an den beiden gegenüberliegenden Seiten der Maschine sowie weitere Schweisselektroden und Schweisselektrodenpaare. Ebenfalls dargestellt sind der Querdraht 3, zwei äussere Längsdrähte (T-Drähte) 4.1, 4.2 und 10 innere Längsdrähte 5.1...10. Oft sind Gitter-Schweissmaschinen erheblich breiter, dies ist durch die vertikale gestrichelte Doppellinie angedeutet. Nicht dargestellt sind weitere Elemente wie die Schweisspresse, die Zuführungen für die Quer- und Längsdrähte und die Schweissstromzuführungen.

Mit jeder der zwei Baugruppen 1.1, 1.2 wirkt eine untere äussere Schweisselektrode 9.1, 9.2 zusammen. Weitere vier Elektrodenpaare 50.1...4 mit je einer oberen Schweisselektrode 51.1...4 und je einer unteren Schweisselektrode 52.1...4 sind zwischen den Baugruppen 1.1, 1.2 und den unteren äusseren Schweisselektroden 9.1, 9.2 angeordnet. Die Stromversorgung der Schweisselektroden und ihr Zusammenwirken mit den Längsdrähten ist in der folgenden Tabelle dargestellt:

| Schweisselektrode | Lage | kontaktierte Drähte | Stromkreis |
|---|---|---|---|
| 21.1 | seitlich | 4.1 (T-Draht) | 1. Polarität: 11.1 |
| 11.1 | oben | 3 (Querdraht) | 2. Polarität: 21.1, 9.1 |
| 9.1 | unten | 5.1 (Längsdraht) | |
| 51.1 | oben | 3 (Querdraht) | 1. Polarität: 51.1 |
| 52.1 | unten | 5.2 (Längsdraht) | 2. Polarität: 52.1 |
| | | 5.3 (Längsdraht) | |
| 51.2 | oben | 3 (Querdraht) | 1. Polarität: 51.2 |
| 52.2 | unten | 5.4 (Längsdraht) | 2. Polarität: 52.2 |
| | | 5.5 (Längsdraht) | |
| 51.3 | oben | 3 (Querdraht) | 1. Polarität: 51.3 |
| 52.3 | unten | 5.6 (Längsdraht) | 2. Polarität: 52.3 |
| | | 5.7 (Längsdraht) | |
| 51.4 | oben | 3 (Querdraht) | 1. Polarität: 51.4 |
| 52.4 | unten | 5.8 (Längsdraht) | 2. Polarität: 52.4 |
| | | 5.9 (Längsdraht) | |
| 9.2 | unten | 5.10 (Längsdraht) | 1. Polarität: 11.2 |
| 11.2 | oben | 3 (Querdraht) | 2. Polarität: 21.2, 9.2 |
| 21.2 | seitlich | 4.2 (T-Draht) | |

Grundsätzlich können alle Elektrodengruppen mit derselben Schweissspannung versorgt werden, weil immer zwei Längsdrähte mit dem Querdraht verschweisst werden.

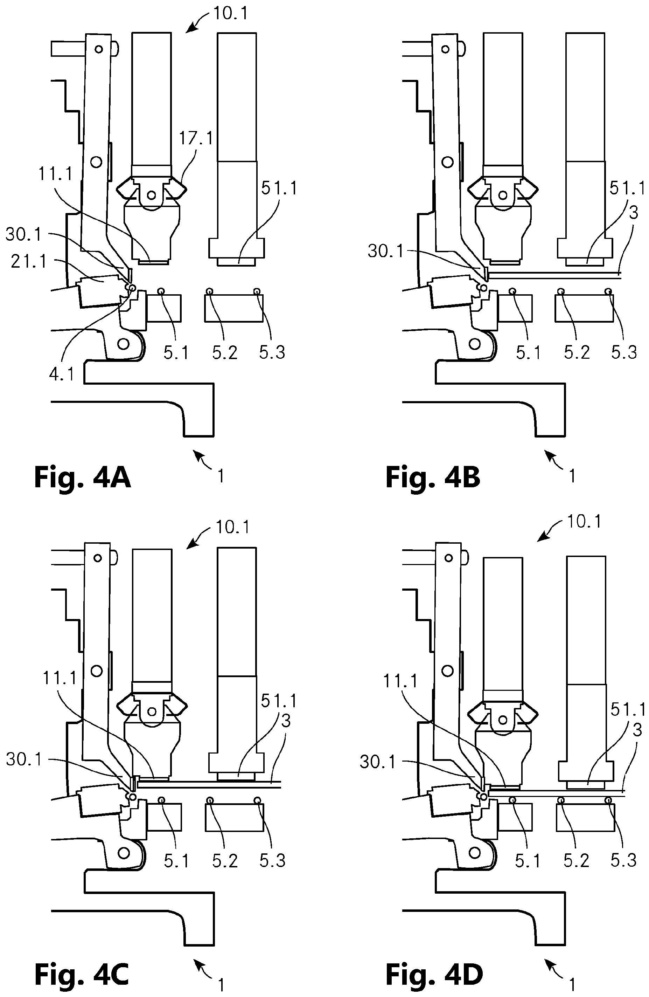

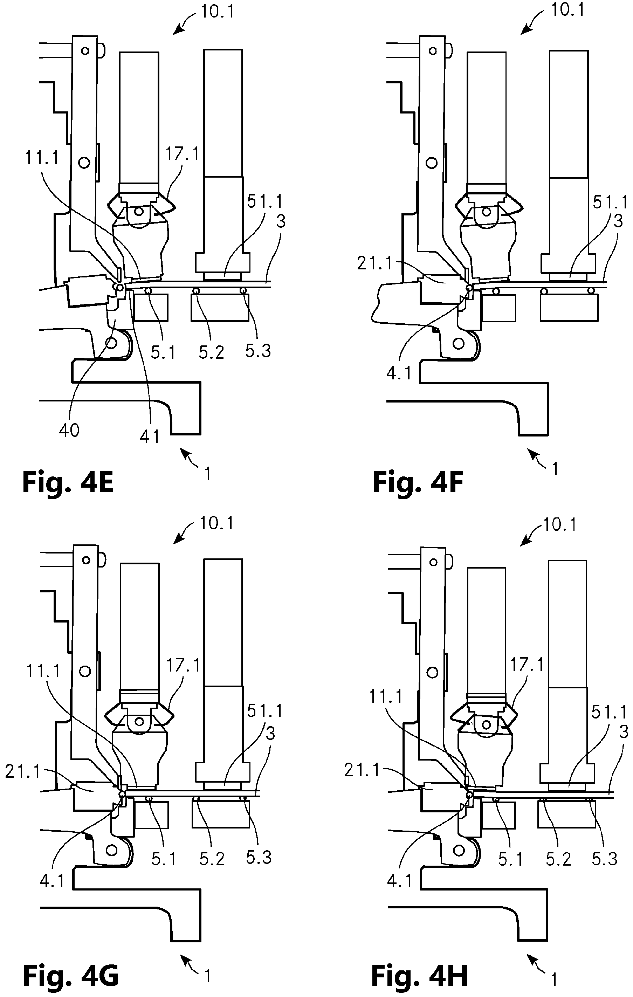

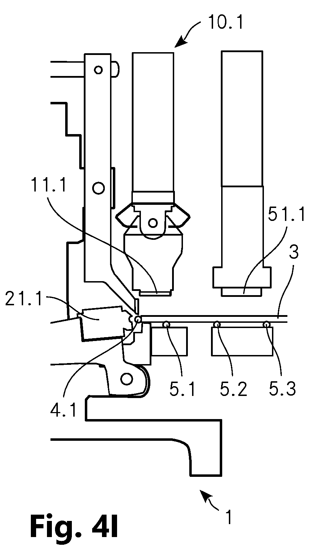

Das Verschweissen eines Querdrahts mit mehreren Längsdrähten, einschliesslich zweier seitlicher T-Drähte, wird im Zusammenhang mit den Figuren 4A-I beschrieben. Dargestellt ist jeweils nur der linke äussere Bereich der in der Fig. 3 gezeigten Schweissmaschine. Der Ablauf ist wie folgt:
1. Wie in der Fig. 4A dargestellt sind zunächst die seitlichen Schweisselektroden 21.1, 21.2 und die Pusher 30.1, 30.2 durch entsprechende Positionen der Kolbenstangen 25, 35 der Pneumatikzylinder 24, 34 nach aussen zurückgeschwenkt, die oberen Schweisselektroden 11.1, 11.2, 51.1...10 sind nach oben verfahren. Die schwenkbaren Schweisselektroden 11.1, 11.2 der Schweisselektrodeneinheiten 10.1, 10.2 der Baugruppen 1.1, 1.2 sind aufgrund der Wirkung der Federelemente 17.1, 17.2 in einer Grundstellung mit horizontaler Kontaktfläche.
2. Die Längsdrähte 4.1, 4.2, 5.1...10, einschliesslich der inneren Längsdrähte und der T-Drähte, werden nun um einen Querdrahtabstand nach vorne transportiert.
3. Nun wird - mit einer an sich bekannten Zuführeinrichtung - von oben ein Querdraht 3 in der Schweissebene auf die inneren Längsdrähte 5.1...10 aufgelegt. Im Rahmen dieses Auflegens erfolgt eine Zentrierung in Querrichtung, durch synchrones Einschwenken der beidseitigen Pusher 30.1, 30.2. Der Querdraht 3 wird durch die Schweisselektroden 11.1, 11.2, 51.1...10 nach unten gedrückt und kommt so zentriert auf den inneren Längsdrähten 5.1...10 zu liegen. Die Pusher 30.1 30.2 können durch Betätigung der entsprechenden Pneumatikzylinder 34 wieder nach aussen zurückgeschwenkt werden (siehe Fig. 4B-D).
4. Nun werden die äusseren oberen Schweisselektroden 11.1, 11.2 weiter abgesenkt, so dass der Querdraht 3 in seinem äussersten Bereich, ausserhalb des äussersten Längsdrahts 5.1 der inneren Längsdrähte 5.1...10, nach unten gebogen wird, bis er auf der Anschlagfläche 41 des Anschlagelements 40 zu liegen kommt. Dabei passt sich die Schwenkstellung der äusseren Schweisselektroden 11.1, 11.2 gegen die Wirkung der Federelemente 17.1, 17.2 der lokalen Neigung des Querdrahts 3 an (zur Verdeutlichung ist die Deformation in den Figuren 4A-I übertrieben dargestellt). Durch die inneren Schweisselektroden 51.1...10 ist sichergestellt, dass der Querdraht 3 nur lokal im äussersten Bereich elastisch verformt wird (Fig. 4E).
5. Nun werden die seitlichen Schweisselektroden 21.1, 21.2 nach innen verschwenkt. Sie drücken so die in ihrer Einbuchtung teilweise aufgenommenen äusseren Längsdrähte 4.1, 4.2 (T-Drähte) stirnseitig auf den deformierten Querdraht 3 (Fig. 4F).
6. Nun kann der Schweisstrom eingeschaltet werden. Während des Schweissvorgangs werden die oberen Schweisselektroden 11 und die äusseren Schweisselektroden 21.1, 21.2 weiter zugestellt, um das Eindringen der Längsdrähte 4.1, 4.2, 5.1...10 in den Querdraht 3 zu kompensieren. Weil aufgrund des Eindringens der mittlere Abschnitt des Querdrahts insgesamt 3 parallel nach unten wandert, führt dies zu einer Reduktion der Neigung der äusseren Abschnitte des Querdrahts 3. Die Federelemente 17.1, 17.2 entspannen sich entsprechend wieder. Entsprechend schwenkt die obere Schweisselektrode 11 wieder in ihre horizontale Grundstellung zurück (Fig. 4G) und gegebenenfalls sogar über die horizontale Grundstellung hinaus in eine Stellung mit nach innen geneigter Schweisselektrode 11 (Fig. 4H).
7. Nach Abschluss des Schweissvorgangs werden die oberen Schweisselektroden 11.1, 11.2, 51.1...10 und die äusseren Schweisselektroden 21.1, 21.2 nach oben bzw. aussen verfahren, um die Längsdrähte 4.1, 4.2, 5.1...10 und den Querdraht 3 freizugeben (Fig. 4I). Die oberen Schweisselektroden 11.1, 11.2 nehmen aufgrund der Wirkung der Federelemente 17.1, 17.2 wieder ihre Grundstellung ein. So wird wieder die Ausgangsstellung erreicht und der Kreisprozess kann fortgesetzt werden.

Die Erfindung ist nicht auf das dargestellte Ausführungsbeispiel beschränkt. Sowohl die Konfiguration der Gitter-Schweissmaschine als auch spezifische Details der Baugruppe können im Rahmen des beanspruchten Gegenstandes anders ausgeführt werden.

Wie oben erwähnt, kann insbesondere die Schwenkachse 15 durch eine bogenförmige Führung für das Gelenk-Unterteil 14 mit dem Elektrodenhalter 12 ersetzt werden, wobei die Führung derart am Gelenk-Oberteil 16 angeordnet ist, dass sich eine geometrische Schwenkachse für die Schweisselektrode 11 ergibt, die auf Höhe der Kontaktfläche der Schweisselektrode 11 liegt. Bei der Führung kann es sich z. B. um eine Rollenführung handeln, so dass Reibungskräfte minimiert werden.

Zusammenfassend ist festzustellen, dass die Erfindung eine Baugruppe schafft, welche eine effiziente Herstellung von Drahtgittern mit äusseren Längsdrähten (T-Drähten) ermöglicht.

### Bezugszeichenliste

- 1: Baugruppe
- 1.1, 1.2: Baugruppe
- 2: Rahmen
- 3: Querdraht
- 4.1, 4.2: Längsdraht
- 5.1...10: Längsdraht
- 9.1, 9.2: Schweisselektrode
- 10: Schweisselektrodeneinheit
- 11: Schweisselektrode
- 11.1, 11.2: Schweisselektrode
- 12: Elektrodenhalter
- 13: Klemmbride
- 14: Gelenk-Unterteil
- 15: Schwenkachse
- 16: Gelenk-Oberteil
- 17: Federelement
- 18: Adapter
- 20: Grundeinheit
- 21: Schweisselektrode
- 21.1, 21.2: Schweisselektrode
- 22: Schwenkhebel
- 23: Schwenkachse
- 24: Pneumatikzylinder
- 25: Kolbenstange
- 26: Gabelkopf
- 27: Gelenkachse
- 28: Schwenkflansch
- 29: Gelenkachse
- 30: Pusher
- 30.1, 30.2: Pusher
- 31: Druckplatte
- 32: Schwenkhebel
- 33: Schwenkachse
- 34: Pneumatikzylinder
- 35: Kolbenstange
- 36: Gelenkkopf
- 37: Gelenkachse
- 38: Schwenkflansch
- 39: Gelenkachse
- 40: Anschlagelement
- 41: Anschlagfläche
- 50.1...4: Elektrodenpaar
- 51.1...4: Schweisselektrode
- 52.1...4: Schweisselektrode

## Patentansprüche

1. Baugruppe für eine Gitter-Schweissmaschine zum stirnseitigen Verschweissen eines äusseren Längsdrahts mit Querdrähten, umfassend
a) eine erste Schweisselektrode mit einer ersten Kontaktfläche zum Kontaktieren des äusseren Längsdrahts;
b) eine zweite Schweisselektrode mit einer zweiten Kontaktfläche zum Kontaktieren eines der Querdrähte;
wobei
c) die erste Schweisselektrode in einer ersten Richtung zustellbar ist;
d) die zweite Schweisselektrode in einer zweiten Richtung zustellbar ist, wobei die zweite Richtung eine Komponente senkrecht zur ersten Richtung aufweist; und
e) die zweite Schweisselektrode derart gelagert ist, dass die zweite Kontaktfläche um eine Schwenkachse beweglich ist, wobei die Schwenkachse senkrecht zur ersten und zur zweiten Richtung steht.

2. Baugruppe nach Anspruch 1, **gekennzeichnet durch** ein Anschlagelement, das in der zweiten Richtung gegenüber der zweiten Schweisselektrode angeordnet ist.

3. Baugruppe nach Anspruch 1 oder 2, **dadurch gekennzeichnet, dass** die zweite Schweisselektrode ein Federelement umfasst, um die zweite Kontaktfläche bei fehlender Gegenkraft in eine Grundstellung zu bewegen, wobei in der Grundstellung die zweite Kontaktfläche insbesondere parallel zur ersten Richtung und zur Schwenkachse verläuft.

4. Baugruppe nach einem der Ansprüche 1 bis 3, **gekennzeichnet durch** ein Positionierelement, das parallel zur ersten Richtung beweglich ist, um einen der Querdrähte stirnseitig in eine vorgegebene Querstellung zu bewegen, wobei eine dritte Kontaktfläche des Positionierelements der ersten Kontaktfläche der ersten Schweisselektrode benachbart angeordnet ist.

5. Gitter-Schweissmaschine mit mindestens einer Baugruppe nach einem der Ansprüche 1 bis 4 und mindestens einem weiteren Elektrodenpaar zum Anschweissen des Querdrahts an mindestens einen weiteren Längsdraht entlang einer Längsausdehnung des Querdrahts, wobei die erste Schweisselektrode, die zweite Schweisselektrode und das mindestens eine weitere Elektrodenpaar in einer gemeinsamen Querebene angeordnet sind.

6. Gitter-Schweissmaschine nach Anspruch 5, **gekennzeichnet durch** mindestens eine weitere Schweisselektrode, die der zweiten Schweisselektrode in der zweiten Richtung gegenüberliegend angeordnet ist, wobei die weitere Schweisselektrode und die erste Schweisselektrode parallel miteinander verschaltet sind.

7. Gitter-Schweissmaschine nach Anspruch 6, **dadurch gekennzeichnet, dass** sie folgendes umfasst:
a) eine erste Baugruppe nach einem der Ansprüche 1 bis 4;
b) eine erste weitere Schweisselektrode, angeordnet innen angrenzend an die erste Baugruppe;
c) eine zweite Baugruppe nach einem der Ansprüche 1 bis 4;
d) eine zweite weitere Schweisselektrode, angeordnet innen angrenzend an die zweite Baugruppe; und
e) mindestens ein weiteres Elektrodenpaar, angeordnet zwischen der ersten weiteren Schweisselektrode und der zweiten weiteren Schweisselektrode.

8. Gitter-Schweissmaschine nach Anspruch 7, **dadurch gekennzeichnet, dass** die Längsdrähte derart zuführbar sind, dass die erste Baugruppe und die erste weitere Schweisselektrode einen ersten äusseren Längsdraht und einen ersten weiteren Längsdraht mit dem Querdraht verschweissen, dass die zweite Baugruppe und die zweite weitere Schweisselektrode einen zweiten äusseren Längsdraht und einen zweiten weiteren Längsdraht mit dem Querdraht verschweissen, und dass das mindestens eine weitere Elektrodenpaar mindestens einen dritten und einen vierten weiteren Längsdraht mit dem Querdraht verschweisst, wobei die erste Baugruppe mit der ersten Schweisselektrode, die zweite Baugruppe mit der zweiten Schweisselektrode und das mindestens eine weitere Elektrodenpaar über denselben Schweissstromkreis mit Schweissstrom versorgt werden.

9. Verfahren zur Herstellung eines Drahtgitters, wobei zum stirnseitigen Verschweissen eines äusseren Längsdrahts mit Querdrähten folgende Schritte ausgeführt werden:
a) Positionieren eines der Querdrähte auf mehreren inneren Längsdrähten;
b) Deformieren eines äusseren freien Abschnitts des Querdrahts in eine erste Richtung senkrecht zu einer Hauptrichtung der Längsdrähte und zu einer Hauptrichtung des Querdrahts;
c) Positionieren des äusseren Längsdrahts in einer Schweissposition am freien Ende des deformierten Querdrahts;
d) Verschweissen das äusseren Längsdrahts und der inneren Längsdrähte mit dem Querdraht; und
e) Entlasten des Querdrahts.

10. Verfahren nach Anspruch 9, **dadurch gekennzeichnet, dass** das Verschweissen das äusseren Längsdrahts und der inneren Längsdrähte mit dem Querdraht gleichzeitig erfolgt.

11. Verfahren nach Anspruch 9 oder 10, **dadurch gekennzeichnet, dass** ein Verhältnis zwischen einem Deformationsweg des äusseren freien Abschnitts des Querdrahts am freien Ende des Querdrahts zu einer Eindringtiefe des Querdrahts in die inneren Längsdrähte 0.25-1, insbesondere 0.4-0.75, beträgt.

12. Verfahren nach einem der Ansprüche 9 bis 11, **dadurch gekennzeichnet, dass** das Deformieren des äusseren freien Abschnitts mithilfe einer beweglichen Schweisselektrode erfolgt.

13. Verfahren nach Anspruch 12, **dadurch gekennzeichnet, dass** eine Kontaktfläche der beweglichen Schweisselektrode während des Schritts b) und/oder des Schritts d) verschwenkt wird, um eine Auflagefläche zwischen Schweisselektrode und Querdraht konstant zu halten.
